# EUROPEAN PATENT SPECIFICATION

(11) **EP 4 083 449 B1**
(45) Date of publication and mention of the grant of the patent: **31.07.2024**
(21) Application number: 22382163.8
(22) Date of filing: 25.02.2022
(51) Int. Cl.: F16B 12/24, A47C 17/86, F16B 12/36

(54) **FURNITURE ASSEMBLY WITH SEAT MODULES ATTACHED BY A DETACHABLE COUPLING DEVICE**
MÖBELBAUGRUPPE MIT DURCH LÖSBARE KUPPLUNGSVORRICHTUNG BEFESTIGBARE SITZMODULEN
ASSEMBLAGE DE MEUBLE COMPRENANT DES MODULES DE SIÈGE FIXÉS PAR UN DISPOSITIF DE COUPLAGE AMOVIBLE

(30) Priority: 29.04.2021 ES 202130881 U
(43) Date of publication of application: 02.11.2022
(73) Proprietor: Fama Sofas, S.L.U., 30510 Yecla (Murcia) (ES)
(72) Inventor: Lopez Gil, Felix, 30510 Yecla (ES)
(74) Representative: Ballester Cañizares, Rosalia

(56) References cited:
- WO-A1-2007/073360
- FR-A1- 3 023 331
- FR-A1- 3 095 580
- JP-A- 2002 045 255

## Description

### OBJECT OF THE INVENTION

The following invention relates to a furniture assembly with a plurality of seat modules coupled with a detachable device, with the objective of being able to form sofas based on attached modules, according to the tastes and needs of the user. In this way, the detachable device allows different distributions of independent parts of sofas, even with other furniture elements, to be configured quickly and easily.

Therefore, the purpose of the assembly
of the invention is to be able to attach different independent sofa parts to form a single seat, which may adopt different sizes, designs, and configurations, achieving great flexibility in the assembly and exchange of this type of furniture elements.

The invention falls within the technical field of the furniture sector.

### BACKGROUND OF THE INVENTION

At present, various furniture elements that are currently on the market, are known, among which those with a modular structure, in other words, those made up of independent parts attached together by means of rigid, articulated, fixed or detachable devices, these devices being connected to the frames of said elements or independent modules of furniture, are worth noting. Existing anchoring devices for said types of furniture normally allow a single configuration to achieve determined designs of furniture elements and usually require the manipulation of the whole module to allow connection, it being necessary to lift or rotate it in its entirety to be able to fit the parts that form said anchoring device. Said disadvantage is caused by the fact that the anchoring devices are integrated into the frames of the furniture element modules themselves and cannot he detached from them.

Some of these modules configured to be connected to form a modular seat comprise guides on their sides configured to couple with the guides of other modules, such that each guide located on one side of each module corresponds to a complementary guide located on the side of another module, without said connections by means of guides allowing any flexibility in the assembly, the structure of the modular seat being conditioned by a previously defined assembly configuration.

The document JP2002045255A relates to a furniture assembly wherein seat modules are coupled with a coupling device comprising one guide and one pin inserted in the guide.

The document WO2007/073360A1 relates to a multi-functional joining element capable of rotational movement, which enables to join the goods to each other and append various pieces to the goods. The invention comprises at least one holder surface fixed on at least one joining means to provide connecting adaptation with said joining means for joining the goods to each other and appending pieces to the goods, at least one screw housing element located on at least one joining means to provide fixing characteristic to said joining means and at least one cylinder housing means formed on the surface of at least one joining means to provide connecting adaptation with said joining means.

The document FR3095580A1 provides a fastening system for a piece of furniture comprising at least one insert plate to be mounted on a furniture panel, and a clip comprising a gripping plate provided with at least one tongue, and in which the insert plate is provided with a groove for receiving the tongue of the clip. In particular, the fastening system has the following characteristics: the insert plate comprises a recess for receiving the gripping plate, said recess opening out with the groove and comprising side walls provided with stops cooperating with notches of the gripping plate; the groove and the tongue are provided with mutual clipping means. In particular, when the clip is connected to another piece of furniture, it allows said element to be fixed with a panel on which the insert plate receiving the clip is mounted. In another embodiment, the clip allows the attachment of juxtaposed panels. The invention relates to a piece of furniture provided with the system of the invention.

Finally, the document FR3023331A1 relates to a multifunctional attachment system, the first object of which is to secure furniture modules but which by its design can be used for other functions and in particular to fix shelves, doors or flaps. To this end, the present invention proposes a furniture assembly with a multifunction fastening system comprising: insert plates; staples provided with two tabs spaced from one another and connected to a gripping plate, for which the plates are each provided with a groove or housing for receiving one of said tongues of a staple, the distance between the tongues of the staples being chosen to allow insertion of the staples into insert plates arranged in or on panels of furniture juxtaposed and to allow the staples to hold said panels together, and for which the insert plates are provided with pin receiving holes, spring tabs or accessory fixing screws.

### DESCRIPTION OF THE INVENTION

In order to achieve the objectives and avoid the disadvantages mentioned in the preceding paragraphs, the invention proposes a furniture assembly with a detachable device for the coupling or connection of seat modules according to claim 1.

Thus, in one embodiment, it is sufficient to position the two modules to be attached, side by side, with the guides facing each other, and insert the pin between the two guides, sliding along them at the same time. In another embodiment, the pin could be inserted into the guide of one module and said module, or another module to be connected, moved in one direction of the pin. In other words, a pin could be inserted into and attached to the guide of a module to allow another module without a pin to be connected to it by moving one with respect to the other longitudinally.

In this way, as the guides and the pin have a tongue and groove connection, the guides could have, for example, a female connection and the pin could convert said female connection into a male one to allow it to be fitted to another guide with a female connection.

The fact that the coupling is longitudinal means that the pin is inserted into the guides in a longitudinal direction, sliding said pin into them, and the fact that it is adjustable means that the pin and the guides have a complementary shape that allows it to fit into them, and said adjustment could be by tightening or untightening.

According to the invention,
the pin comprises a fixing flange located at a first end of said pin, said flange being configured to be coupled, by means of elastic deformation, to a groove or an end of a guide, when assembling the pin to said guide, locking the pin. Thus, to uncouple the pin from the guide, it would be necessary to free the pin, deforming it again, and slide the pin in the longitudinal direction opposite to that of the assembly.

In one embodiment, the pin comprises a handle at a second end of said pin, said handle being configured to hold the pin when assembled and uncoupled from the guides. Preferably, the handle comprises a pyramidal or truncated cone shape, with a narrow section that facilitates its manufacture and operation, but above all, that does not prevent or block the possible insertion of a guide into one side of the pin when the latter is already mounted on the opposite side to another guide. In other words, the handle has a section that is similar to the part of the pin that is inserted into the guides, and of a somewhat smaller size.

In one embodiment, each of the guides and the pin comprises a through-hole in a transverse direction, wherein as the pin is assembled to the two guides, said through-holes coincide and are configured to fit a mechanical connecting means locking the pin with respect to said guide. Said connecting means may be a screw, a bolt, a pin, or a similar element.

The pin may be made of a rigid material such as plastic or metal, as may be the guides, which will preferably be made of the same material as the frame of the seat in which they are located.

In one embodiment, the tight-fitting assembly of the pin to the guides comprises a clearance so that assembly and disassembly are easier than if it were by tightening, which is required to make a rigid connection between the two parts.

In one embodiment, each of the guides is attached to the frame of the seat module in which it is located. In this way, the connection between the modules is made between the elements that support the seat as well as the loads applied to it.

According to the invention,
each of the guides comprises a cavity comprising a dovetail shape, wherein said cavity is arranged in the longitudinal direction of the guide; and wherein the pin comprises a coincident shape and adjustable to two dovetail-shaped cavities of the two guides arranged opposite each other.

### BRIEF DESCRIPTION OF THE DRAWINGS

In order to supplement the description given below, and to help with a better understanding of the characteristics of the invention, this descriptive report is accompanied by a set of drawings, the figures of which represent, for illustrative and non-limiting purposes, the most characteristic details of the invention.
Figure 1. Shows a perspective view of the pin comprising a bar shape in which the through-hole, the fixing flange at a first end and the handle at the other end can be seen.
Figure 2. Shows a detailed sectional perspective view of the pin, showing the shape of the fixing flange.
Figure 3. Shows a detailed perspective of two structures or frames of two seat modules, wherein the pin is mounted on a guide of a first module, which is slightly raised with respect to the second module, in order to be able to assemble it on the guide of said second module.
Figure 4. Shows a perspective of two modules assembled using two coupling devices each comprising two opposing guides of two different modules, said guides being assembled using a pin.
Figure 5. Shows a detailed perspective of a pin device arranged to be assembled on a guide.

### DESCRIPTION OF A PREFERRED EMBODIMENT.

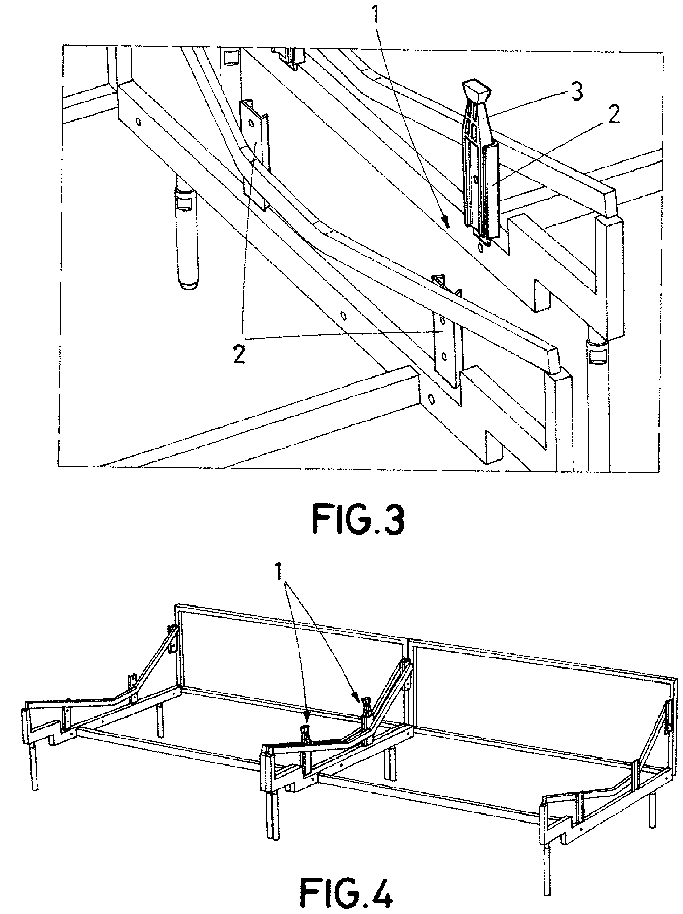

According to the numbering adopted in the figures, the detachable coupling device (1) for connecting seat modules mainly comprises two guides (2) each arranged on a frame of a module of said seat, as can be seen in figures 3 and 4, and a pin (3) configured to be assembled to these two guides (2), the latter being arranged opposite each other symmetrically, in other words, being oriented in the same longitudinal direction, and having a similar shape, size and position.

In this way, the coupling device (1) allows different modules to be connected without them having a specific connection depending on the side to which they are to be connected, but all being the same, allowing flexibility to attach the modules rigidly and easily to the taste of the user. In other words, any other module with a guide (2) can be connected to each side of each seat module with a guide (2) without this requiring a special configuration.

In order to make the connection more reliable and stable, each module preferably comprises two guides (2) on each side for coupling to another module, as shown in the figures. In this way, the connection between modules is made by means of two coupling devices (1), in other words, by means of four guides (2) and two pins (3) assembled to each pair of opposing guides (2).

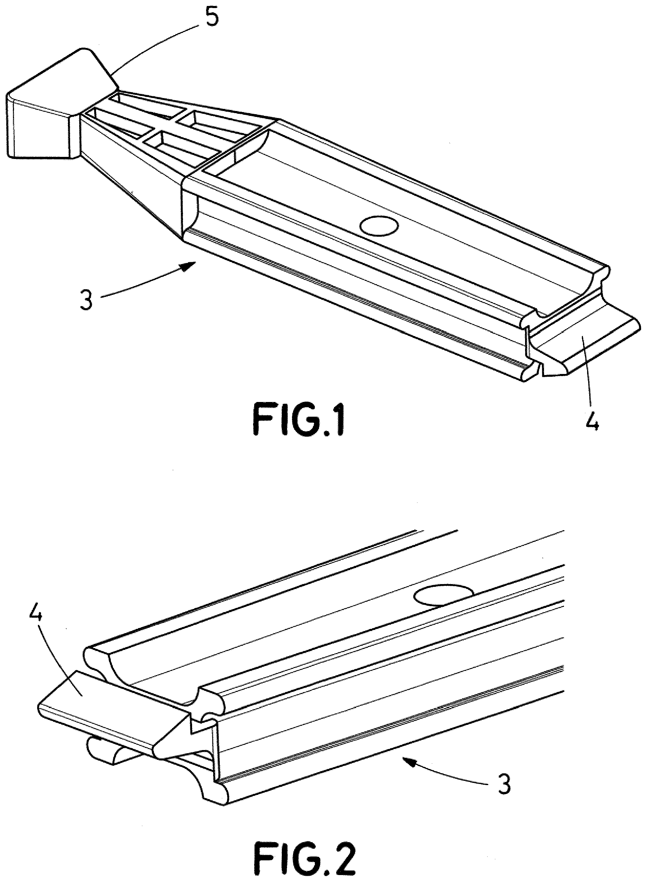

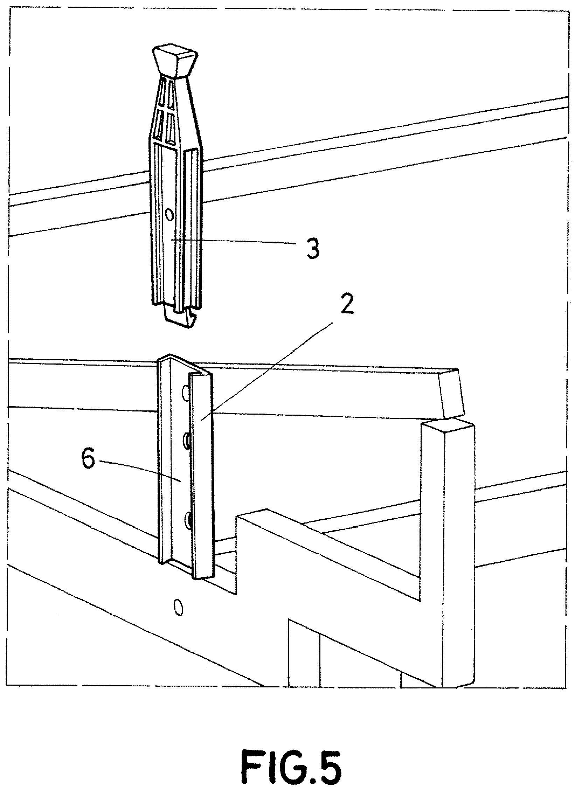

As can be seen in figure 1, the pin (3) has the shape of a longitudinal rectangular prismatic bar, wherein the longitudinal handles of said bar are rounded and the sides have cavities, also longitudinal, which make the pin (3) complementary to the two guides (2) arranged opposite each other. Said guides (2), as can be seen in figures 3 and 5, have a longitudinal cavity (6) with a dovetail shape, so as to allow said complementary adjustment to the pin (3) described.

In addition, the pin (3) has a fixing flange (4) at a first end, which allows that when the pin (3) is assembled into a guide (2), said assembly is blocked with respect to the guide (2), the flange (4) remaining fitted in a groove or the end of the guide (2). In this way, the fixing flange (4) allows a pin (3) to be attached to a guide (2) waiting to be connected to a second guide (2).

Therefore, the coupling device (1) can be used by first positioning the two guides (2) in an opposing position and then inserting the pin (3) into these two guides (2), or by first inserting the pin (3) into a guide (2) of a first seat module, remaining attached by means of the flange (4), and then inserting a guide (2) of a second module into the pin (3), which would require the longitudinal displacement of the entire second seat module, as shown in figure 3.

In order to facilitate the attachment of the pin (3), above all, in the assembly and disassembly of the guides (2), the latter comprises a handle (5) at a second end, opposing the end where the fixing flange (4) is located, said handle comprising a pyramidal or truncated cone shape, which does not prevent the insertion of a guide (2) in a lateral half of the pin (3) at this second end, above all, when said pin (3) is already inserted on the other side into another guide (2).

As can be seen in the figures, both the pin (3) and the guides (2) comprise a through-hole in an intermediate part, such that when the pin (3) is fitted into said guides (2), the through-holes coincide, which allows it to be attached to a mechanical means, such as a screw, a bolt, or another pin.

The materials of the coupling device (1) must be sufficiently rigid to allow the use described and may be made of metal such as steel or plastic.

## Claims

1. A furniture assembly comprising a plurality of seat modules coupled with a detachable coupling device (1),
wherein the detachable coupling device (1) comprises:
two guides (2) configured to face each other symmetrically, each of said guides (2) being on a different seat module; and
a pin (3) comprising a bar shape and configured to be assembled, in a longitudinal coupling, by means of a tight sliding tongue and groove joint, to the two guides (2), each of said guides (2) opposing each other arranged in a symmetrical manner with respect to the pin (3);
wherein when assembling the pin (3) to the two guides (2) the modules of each guide (2) are attached in a rigid connection,
wherein the detachable coupling device (1) is **characterised in that**,
the pin (3) comprises a fixing flange (4) located at a first end of said pin (3), said flange (4) being configured to be coupled, by means of elastic deformation, to a groove or an end of a guide (2), when assembling the pin (3) to said guide (2), blocking the pin (3) with respect to said guide (2), and
wherein each of the guides (2) comprises at least one cavity (6) comprising a dovetail shape, wherein said cavity (6) is oriented in the longitudinal direction of the guide (2); and wherein the pin (3) comprises a shape coincident and adjustable to two dovetail-shaped cavities (6) of the two guides (2) arranged opposite each other.

2. The furniture assembly, according to any of the preceding claims, wherein the pin (3) comprises a handle (5) located at a second end of said pin (3), configured to hold said pin (3) when assembling and disassembling it with respect to the guides (2).

3. The furniture assembly, according to any of the preceding claims, wherein each of the two guides (2) and the pin (3) comprises a through-hole in a transverse direction, wherein when the pin (3) is assembled to the two guides (2), said through-holes coincide and are configured to be fitted to a mechanical connecting means, blocking the pin (3) with respect to said guide (2).

4. The furniture assembly, according to any of the preceding claims, wherein the assembly of the pin (3) to the guides (2) comprises a clearance.

5. The furniture assembly, according to any of the preceding claims, wherein each of the guides (2) is attached to a frame of the module of the seat in which it is located.

## Patentansprüche

1. Möbelbaugruppe, umfassend eine Vielzahl von Sitzmodulen, die mit einer lösbaren Kupplungsvorrichtung (1) gekoppelt sind,
wobei die lösbare Kupplungsvorrichtung (1) Folgendes umfasst:
zwei Führungen (2), die dazu konfiguriert sind, einander symmetrisch zugewandt zu sein, wobei sich jede der Führungen (2) auf einem unterschiedlichen Sitzmodul befindet; und
einen Stift (3), umfassend eine Stangenform und dazu konfiguriert, in einer Längskopplung mittels einer engen gleitenden Nut- und Federverbindung mit den beiden Führungen (2) zusammengebaut zu werden, wobei jede der gegenüberliegenden Führungen (2) in Bezug auf den Stift (3) symmetrisch angeordnet ist;
wobei beim Zusammenbauen des Stiftes (3) mit den beiden Führungen (2) die Module jeder Führung (2) in einer starren Verbindung befestigt werden,
wobei die lösbare Kupplungsvorrichtung (1) **dadurch gekennzeichnet ist, dass**
der Stift (3) einen Fixierflansch (4) umfasst, der an einem ersten Ende des Stifts (3) lokalisiert ist, wobei der Flansch (4) dazu konfiguriert ist, mittels elastischer Verformung mit einer Nut oder einem Ende einer Führung (2) gekoppelt zu werden, wenn der Stift (3) mit der Führung (2) zusammengebaut wird, wobei der Stift (3) in Bezug auf die Führung (2) blockiert wird, und
wobei jede der Führungen (2) mindestens einen eine Schwalbenschwanzform umfassenden Hohlraum (6) umfasst, wobei der Hohlraum (6) in der Längsrichtung der Führung (2) ausgerichtet ist; und wobei der Stift (3) eine Form umfasst, die mit zwei schwalbenschwanzförmigen Hohlräumen (6) der beiden einander gegenüber angeordneten Führungen (2) übereinstimmt und an diese anpassbar ist.

2. Möbelbaugruppe gemäß einem der vorhergehenden Ansprüche, wobei der Stift (3) einen Griff (5) umfasst, der an einem zweiten Ende des Stifts (3) lokalisiert ist und dazu konfiguriert ist, den Stift (3) zu halten, wenn er in Bezug auf die Führungen (2) zusammengebaut und auseinandergebaut wird.

3. Möbelbaugruppe gemäß einem der vorhergehenden Ansprüche, wobei jede der beiden Führungen (2) und der Stift (3) ein Durchlassloch in einer Querrichtung umfasst, wobei, wenn der Stift (3) mit den beiden Führungen (2) zusammengebaut wird, die Durchlasslöcher zusammenfallen und dazu konfiguriert sind, mit einem mechanischen Verbindungsmittel versehen zu werden, das den Stift (3) in Bezug auf die Führung (2) blockiert.

4. Möbelbaugruppe gemäß einem der vorhergehenden Ansprüche, wobei der Zusammenbau des Stiftes (3) mit den Führungen (2) ein Spiel umfasst.

5. Möbelbaugruppe gemäß einem der vorhergehenden Ansprüche, wobei jede der Führungen (2) an einem Rahmen des Moduls des Sitzes befestigt ist, in dem sie lokalisiert ist.

## Revendications

1. Ensemble de mobilier comprenant une pluralité de modules de siège accouplés à un dispositif d'accouplement détachable (1),
dans lequel le dispositif d'accouplement détachable (1) comprend :
deux guides (2) conçus pour se faire face symétriquement, chacun desdits guides (2) étant sur un module de siège différent ; et
une broche (3) comprenant une forme de barre et conçue pour être assemblée, dans un accouplement longitudinal, au moyen d'un joint à rainure et languette coulissant serré, aux deux guides (2), chacun desdits guides (2) opposés l'un à l'autre étant agencé de manière symétrique par rapport à la broche (3) ;
dans lequel lors de l'assemblage de la broche (3) aux deux guides (2), les modules de chaque guide (2) sont fixés selon une liaison rigide,
dans lequel le dispositif d'accouplement détachable (1) est **caractérisé en ce que**,
la broche (3) comprend une bride de fixation (4) située au niveau d'une première extrémité de ladite broche (3), ladite bride (4) étant conçue pour être accouplée, au moyen d'une déformation élastique, à une rainure ou une extrémité d'un guide (2), lors de l'assemblage de la broche (3) audit guide (2), bloquant la broche (3) par rapport audit guide (2), et
dans lequel chacun des guides (2) comprend au moins une cavité (6) comprenant une forme de queue d'aronde, dans lequel ladite cavité (6) est orientée dans la direction longitudinale du guide (2) ; et dans lequel la broche (3) comprend une forme coïncidente et ajustable par rapport à deux cavités (6) en forme de queue d'aronde des deux guides (2) agencés l'un en face de l'autre.

2. Ensemble de mobilier, selon l'une quelconque des revendications précédentes, dans lequel la broche (3) comprend une poignée (5) située au niveau d'une seconde extrémité de ladite broche (3), conçue pour maintenir ladite broche (3) lors de son assemblage et de son désassemblage par rapport aux guides (2).

3. Ensemble de mobilier, selon l'une quelconque des revendications précédentes, dans lequel chacun des deux guides (2) et la broche (3) comprennent un trou traversant dans une direction transversale, dans lequel lorsque la broche (3) est assemblée aux deux guides (2), lesdits trous traversants coïncident et sont conçus pour être adaptés à un moyen de liaison mécanique, bloquant la broche (3) par rapport audit guide (2).

4. Ensemble de mobilier, selon l'une quelconque des revendications précédentes, dans lequel l'assemblage de la broche (3) aux guides (2) comprend un dégagement.

5. Ensemble de mobilier, selon l'une quelconque des revendications précédentes, dans lequel chacun des guides (2) est fixé à un cadre du module du siège dans lequel il est situé.
